# EUROPÄISCHE PATENTSCHRIFT

(11) **EP 1 587 856 B1**
(45) Veröffentlichungstag und Bekanntmachung des Hinweises auf die Patenterteilung: **09.04.2008**
(21) Anmeldenummer: 03795916.0
(22) Anmeldetag: 18.12.2003
(51) Int. Cl.: C08G 77/26, C08G 77/54, D06M 15/643, C08L 83/08, C08L 83/14

(54) **AMINOMETHYLENFUNKTIONELLE SILOXANE**
AMINOMETHYLENE FUNCTIONAL SILOXANES
SILOXANES A FONCTION AMINOMETHYLENE

(30) Priorität: 30.01.2003 DE 10303693
(43) Veröffentlichungstag der Anmeldung: 26.10.2005
(73) Patentinhaber: Wacker Chemie AG, 81737 München (DE)
(72) Erfinder: SCHÄFER, Oliver, 84489 Burghausen (DE); BAUER, Andreas, 84375 Kirchdorf (DE); KNEISSL, Andrea, 85521 Ottobrunn (DE)
(74) Vertreter: Fritz, Helmut
(86) Internationale Anmeldenummer: PCT/EP2003/014488
(87) Internationale Veröffentlichungsnummer: WO 2004/067605

(56) Entgegenhaltungen:
- EP-A- 1 201 699
- WO-A-03/068845
- DE-A- 2 500 020
- GB-A- 1 120 859

## Beschreibung

Die Erfindung betrifft aminomethylenfunktionelle Siloxane und ein Verfahren zu deren Herstellung unter Einsatz von Alkoxysilanen.

Aminoalkyl-polysiloxane, bei denen die Aminogruppen seitenständig an der Siloxankette hängen, sind in vielen Anwendungsbereichen brauchbar, z.B. als Weichmacher für Textilien oder textile Gewebe wie z.B. Baumwolle.

Bekannt ist z.B. die basenkatalysierte Äquilibrierung von Octamethylcyclotetrasiloxan mit alkoxyfunktionellen Aminopropylsilanen oder Aminoethylaminopropylsilanen. Diese Reaktion hat den Nachteil, daß hierzu lange Reaktionszeiten nötig sind, und durch die Äquilibrierungsbedingungen Restgehalte an D4-Cyclen im Produkt verbleiben, die anschließend destillativ abgetrennt werden müssen.

Ein weiteres Verfahren zur Herstellung von solchen Polysiloxanen besteht darin, sie durch Cohydrolyse von difunktionellen Silanen mit organofunktionellen Aminosilanen herzustellen. Dies hat jedoch den Nachteil, daß die Cohydrolyse, wegen des Vorhandenseins von Aminogruppen, nicht mit Chlorsilanen durchgeführt werden kann, sondern Alkoxysilane verwendet werden müssen. Das bedeutet, der Hydrolyse muß zuerst die Veresterung der Chlorsilane vorangehen, wobei bei der anschließenden Hydrolyse der wertvolle Alkohol verlorengeht. Weiterhin hat dieses Verfahren den Nachteil, daß hierbei Katalysatoren verwendet werden müssen und ebenfalls Cyclenbildung beobachtet wird.

In DE-A-2500020 und DE 1244181 ist ein Verfahren zur Herstellung von endständigen Aminomethylsiloxanen beschrieben. Dabei werden OH-terminierte Siloxane mit sekundären Aminomethylsilanen unter Abspaltung von Alkohol umgesetzt. Der Vorteil dieses Verfahrens ist eine Umsetzung eines Siloxans mit einem Alkoxysilan ohne dabei die Reaktionsmischung zu äquilibrieren, was zur Entstehung von Siloxan-Cyclen als Nebenprodukt führen würde und daher nicht gewollt ist. Die so hergestellten Siloxane sind wegen der endständigen Aminogruppe jedoch bei einem gegebenen Molekulargewicht bzw. Viskosität nur mit einer definierten Aminzahl zu erhalten. Diese Materialien sind auch nur schwer in Wasser zu emulgieren, was für die Anwendungen dieser Verbindungen in wäßrigen Systemen, wie sie z.B. im Textil-Bereich üblich ist, beinahe prohibitiv ist. Materialien, die bei gegebenem Molekulargewicht eine unterschiedliche Aminzahl haben können, was unter anderem für die Anbindung auf Fasern oder textilen Geweben von Bedeutung ist, kann man nur durch die Verwendung von seitenständigen Aminogruppen erhalten, wobei die Aminogruppen in der Seitengruppe eine Emulgierung in Wasser stark erleichtern.

Es bestand daher die Aufgabe, seitenständige, aminofunktionelle Siloxane auf einfache Weise bereitzustellen, die bei gegebenem Molekulargewicht eine variable Anzahl an Aminogruppen haben können.

Gegenstand der Erfindung sind aminofunktionelle Organosiloxane der allgemeinen Formel I,

(SiO_{4/2})ₖ(RSiO_{3/2})ₘ(R₂SiO_{2/2})ₚ(R₃SiO_{1/2})_{q}[O_{1/2}H]ₜ [(O_{f/2}R¹_{3-f}SiCR²₂)_{3-g}NR_{g}⁴]ₛ (I)

in der
- R: ein Wasserstoffatom oder einen monovalenten gegebenenfalls mit -CN, -NCO, -NR^{x}₂, -COOH, -COOR^{x}, -Halogen, -Acryl, -Epoxy, -SH, -OH oder -CONR^{x}₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR^{x}- ersetzt sein können und in denen eine oder mehrere, einander nicht benachbarte Methineinheiten durch Gruppen, -N=,-N=N-,oder -P= ersetzt sein können,
- R¹: ein Wasserstoffatom oder einen monovalenten gegebenenfalls mit -CN, -NCO, -COOH, -COOR^{x}, -Halogen, -Acryl, -SH, -OH oder -CONR^{x}₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR^{x}- ersetzt sein können und in denen eine oder mehrere, einander nicht benachbarte Methineinheiten durch Gruppen, -N=, -N=N-, oder -P= ersetzt sein können,
- R^{x}: Wasserstoff oder einen gegebenenfalls mit -CN oder Halogen substituierten C₁-C₁₀-Kohlenwasserstoffrest,
- R²: Wasserstoff oder einen gegebenenfalls mit -CN oder Halogen substituierten C₁-C₂₀-Kohlenwasserstoffrest,
- R⁴: Wasserstoff oder einen gegebenenfalls mit -CN oder Halogen substituierten C₁-C₂₀-Kohlenwasserstoffrest,
- k, m, p, q: unabhängig voneinander eine ganze Zahl von mindestens 0 bis 100 000,
- f: eine ganze Zahl von 1, 2 oder 3,
- g: eine ganze Zahl von 0, 1 oder 2,
- s: eine ganze Zahl von mindestens 1 und
- t: eine ganze Zahl von mindestens 0 bedeuten, wobei
- k + m + p + q: eine ganze Zahl von mindestens 1 ist.

Die aminofunktionellen Organosiloxane der allgemeinen Formel I weisen eine Aminofunktion auf, die durch ein C-Atom an ein Siliciumatom der Siloxankette gebunden sind. Dabei ist vorzugsweise mindestens eine Aminofunktionen in der Kette positioniert, gegebenenfalls können aber auch endständige Aminogruppen vorhanden sein. Die Aminofunktionen sind sehr reaktionsfähig. Beispielsweise können deshalb mit den aminofunktionellen Siloxanen durch Reaktion mit Epoxyfunktionellen Verbindungen vernetzte Epoxid-Harze hergestellt werden.

R kann aliphatisch gesättigt oder ungesättigt, aromatisch, geradkettig oder verzweigt sein. R ist vorzugsweise ein C₁-C₁₀-Alkylrest oder Phenylrest, insbesondere unverzweigter C₁-C₃-Alkylrest, der substituiert sein kann. Besonders bevorzugt ist R ein Methylrest.

Die C₁-C₂₀-Kohlenwasserstoffreste R¹ können aliphatisch gesättigt oder ungesättigt, aromatisch, geradkettig oder verzweigt sein. R¹ weist vorzugsweise 1 bis 12 Atome, insbesondere 1 bis 6 Atome, vorzugsweise nur Kohlenstoff- und Waserstoffatome auf.
Vorzugsweise ist R¹ ein geradkettiger oder verzweigter C₁-C₆-Alkylrest. Besonders bevorzugt sind die Reste Methyl, Ethyl, Phenyl, Vinyl und Trifluorpropyl.

Die Reste **R²** können unabhängig voneinander ebenfalls aliphatisch gesättigt oder ungesättigt, aromatisch, geradkettig oder verzweigt sein. **R²** ist vorzugsweise ein C₁-C₃-Alkylrest oder Wasserstoff. Besonders bevorzugt ist **R²** Wassserstoff.

Die Reste **R⁴** können unabhängig voneinander ebenfalls aliphatisch gesättigt oder ungesättigt, aromatisch,cyclisch, geradkettig oder verzweigt sein. **R⁴** ist vorzugsweise ein C₁-C₁₂-Alkyl- oder Arylrest oder Wasserstoff. Besonders bevorzugt ist **R⁴** Wasserstoff, Methyl, Butyl, Phenyl oder Cyclohexyl. **R⁴** kann gegebenenfalls noch Heteroatome wie z.B. Sauerstoff oder Stickstoff oder ander funktionelle Gruppen enthalten.

Die Reste R^{x} sind vorzugsweise Wasserstoff oder ein substituierter C₁-C₅-Alkylrest.

Vorzugsweise bedeutet p Werte von 3 bis 1000, insbesondere 5 bis 500 auf.

Vorzugsweise bedeuten k und m jeweils unabhängig voneinander eine ganze Zahl von mindestens 0 bis 1000,insbesondere 0.

Vorzugsweise bedeutet q eine ganze Zahl von mindestens 1.

Vorzugsweise bedeutet k + m den Wert 0, d.h. es handelt sich um lineare aminofunktionelle Organosiloxane. Vorzugsweise bedeutet q dabei 1 oder 2.

Vorzugsweise bedeutet s Werte von 1 bis 50, insbesondere 2 bis 10.

Vorzugsweise ist g kleiner oder gleich f.

Vorzugsweise bedeutet t Werte von 0 bis 10, insbesondere 0, 1 oder 2.

Vorzugsweise bedeutet k + m + p + q eine ganze Zahl von mindestens 2, insbesondere mindestens 3.

Gegenstand der Erfindung ist auch ein Verfahren zur Herstellung der aminofunktionellen Organosiloxane der allgemeinen Formel I, bei dem Siloxane der allgemeinen Formel (II)

(SiO_{4/2})ₖ(RSiO_{3/2})ₘ(R₂SiO_{2/2})p(R₃SiO_{1/2})q[O_{1/2}H]ᵣ (II),

mit aminofunktionellen Silanen der Formel, (III)

[(R³O)_{f}R¹_{3-f}SiCR²₂]_{3-g}NR_{g}⁴ (III)

umgesetzt werden, wobei
- R³: Wasserstoff oder einen gegebenenfalls mit -CN oder Halogen substituierten C₁-C₂₀-Kohlenwasserstoffrest,
- r: eine ganze Zahl von mindestens 1 bedeuten und
- t: kleiner als r ist und
- R, R¹, R², R⁴ k, m, p, q, f, g und s: die vorstehenden Bedeutungen aufweisen.

Die Reste R³ können unabhängig voneinander ebenfalls aliphatisch gesättigt oder ungesättigt, aromatisch, geradkettig oder verzweigt sein. R³ ist vorzugsweise ein C₁-C₅-Alkylrest, insbesondere C₁-C₃-Alkylrest oder Wasserstoff. Besonders bevorzugt ist R³ Methyl oder Ethyl.

Vorzugsweise wird zur Herstellung von linearem aminofunktionellem Organosiloxan der allgemeinen Formel I Organosiloxan der allgemeinen Formel II eingesetzt, bei dem r den Wert 1 oder 2 aufweist.

Die eingesetzten Alkoxysilane der allgemeinen Formel III können einfach und in hohen Ausbeuten durch Aminierung der entsprechenden Chloralkyl(alkoxy)silane hergestellt werden, wie es z.B. in SU 395371 beschrieben wird.

Beispiele für Alkoxysilane der allgemeinen Formel III sind:
- H₃COSi(CH₃)₂CH₂NH₂, (H₃CO)₂Si(CH₃)CH₂NH₂, (H₃CO)₃SiCH₂NH₂, H₅C₂OSi(CH₃)₂CH₂NH₂, (HₛC₂O)₂Si(CH₃)CH₂NH₂, (H₅C₂O)₃SiCH₂NH₂, H₃COSi(CH₃)₂CH₂N(C₄H₉)₂, (H₃CO)₂Si(CH₃)CH₂N(C₄H₉)₂, (H₃CO)₃SiCH₂N(C₄H₉)₂, H₅C₂OSi(CH₃)₂CH₂N(C₄H₉)₂, (H₅C₂O)Si(CH₃)₂CH₂N(C₄H₉)₂, (H₅C₂O)₃SiCH₂N(C₄H₉)₂, H₃COSi(CH₃)₂CH₂NH(C₆H₅), (H₃CO)₂Si(CH₃)CH₂NH(C₆H₅), (H₃CO)₃SiCH₂NH(C₆H₅), H₅C₂OSi(CH₃)₂CH₂NH(C₆H₅), (H₅C₂O)₂Si(CH₃)CH₂NH(C₆H₅), (H₅C₂O)₃SiCH₂NH(C₆H₅), H₃COSi(CH₃)₂CH₂NH(C₆H₁₁), (H₃CO)₂Si(CH₃)CH₂NH(C₆H₁₁), (H₃CO)₃SiCH₂NH(C₆H₁₁), H₅C₂OSi(CH₃)₂CH₂NH(C₆H₁₁), (H₅C₂O)₂Si(CH₃)CH₂NH(C₆H₁₁), (H₅C₂O)₃SiCH₂NH(C₆H₁₁), (H₃COSi(CH₃)₂CH₂)₂NH, (H₃COSi(CH₃)₂CH₂)₃N, (H₅C₂OSi(CH₃)₂CH₂)₂NH, (H₅C₂OSi(CH₃)₂CH₂)₃)N, ((H₃CO)₂Si(CH₃)CH₂)₂NH, ((H₃CO)₂Si(CH₃)CH₂)₃N, ((H₃CO)₃SiCH₂)₂NH, ((H₃CO)₃)SiCH₂)₃N, sowie viele andere.

Die Alkoxysilane der allgemeinen Formel III reagieren einfach und sehr schnell mit hydroxyfunktionellen Siloxanen der allgemeinen Formel II. Dabei kann auf die Verwendung spezieller Katalysatoren verzichtet werden. Die Reaktion verläuft autokatalytisch. Es können jedoch nach Bedarf andere Katalysatoren verwendet werden.

Um eine Reaktion zwischen dem Organosiloxan der allgemeinen Formel II und dem Alkoxysilan der allgemeinen Formel III zu ermöglichen, muß das Organosiloxan der allgemeinen Formel II Hydroxy-Gruppen enthalten. Die Reaktion verläuft unter Abspaltung des Alkohols R³OH. Dieser kann nach der Reaktion gegebenenfalls im Produkt verbleiben oder auch entfernt werden.

Bei.dem Verfahren zur Herstellung von aminofunktionellem Organosiloxan der allgemeinen Formel I ist die Menge der verwendeten Alkoxysilane der allgemeinen Formel III abhängig von der Menge der zu funktionalisierenden Silanol-Gruppen. Will man jedoch eine vollständige Funktionalisierung der OH-Gruppen erreichen, so ist das Alkoxysilan in mindestens äquivalenten Mengen zuzugeben.
Falls das Alkoxysilan der allgemeinen Formel III zu dem Organosiloxan der allgemeinen Formel II im Unterschuss zugegeben wird, können restliche nicht umgesetzte Si-OH Gruppen im aminofunktionellen Organosiloxan der allgemeinen Formel I verbleiben oder können mit anderen Verbindungen, welche mit Si-OH-Gruppen reagieren, umgesetzt werden, so daß eine weitere Verminderung des Si-OH-Gehaltes erreicht werden kann und z.B. unreaktive Endgruppen in die Siliconölmischung eingeführt werden können, womit bei späteren Copolymerisationen eine Begrenzung des Molekulargewichtes erreicht werden kann. Dabei ist eine Isolierung des Zwischenproduktes nicht unbedingt nötig. Es können auch Organosiloxane der allgemeinen Formel II eingesetzt werden, die bereits reaktive Gruppen u.a. auch Aminoalkyl-Gruppen tragen.

Bevorzugt wird das Verfahren bei 0 °C bis 100 °C, besonders bevorzugt bei 10°C bis 40 C durchgeführt.
Das Verfahren kann dabei sowohl unter Einbeziehung von Lösungsmitteln durchgeführt werden, oder aber auch ohne die Verwendung von Lösungsmitteln in geeigneten Reaktoren. Dabei wird gegebenenfalls unter Vakuum oder unter Überdruck oder bei Normaldruck (0,1 Mpa) gearbeitet. Der entstandene Alkohol kann dann unter vermindertem Druck bei Raumtemperatur oder bei erhöhter Temperatur aus dem Reaktionsgemisch entfernt werden.

Bei der Verwendung von Lösungsmitteln sind inerte, insbesondere aprotische Lösungsmittel wie aliphatische Kohlenwasserstoffe, wie z.B. Heptan oder Decan und aromatische Kohlenwaserstoffe wie z.B. Toluol oder Xylol bevorzugt. Ebenfalls können Ether wie THF, Diethylether oder MTBE verwendet werden. Die Menge des Lösungsmittels sollte ausreichen, um eine ausreichende Homogenisierung der Reaktionsmischung zu gewährleisten. Lösungsmittel oder Lösungsmittelgemische mit einem Siedepunkt bzw. Siedebereich von bis zu 120° C bei 0,1 MPa sind bevorzugt.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Versuch 1:

In einem 1-Liter Stahlautoklaven wurden 100 g Chlormethyldimethylmethoxysilan (Starfire Systems, Troy, USA) in einem Autoklaven mit 300 g flüssigem Ammoniak bei einer Temperatur von 100 °C zur Reaktion gebracht. Nach 5 Stunden wurde auf Raumtemperatur abgekühlt, der Autoklav auf Normaldruck entspannt und 500 ml trockenes Heptan hinzugegeben. Das ausgefallene Ammoniumchlorid wurde abfiltriert, das Heptan destillativ entfernt und das Produkt destillativ gereinigt. Man erhielt 56 g Aminomethyldimethylmethoxysilan.

### Versuch 2:

In einem 1-Liter Stahlautoklaven wurden 100 g Chlormethyltrimethoxysilan (Starfire Systems, Troy, USA) in einem Autoklaven mit 300 g flüssigem Ammoniak bei einer Temperatur von 100 °C zur Reaktion gebracht. Nach 5 Stunden wurde auf Raumtemperatur abgekühlt, der Autoklav auf Normaldruck entspannt und 500 ml trockenes Heptan hinzugegeben. Das ausgefallene Ammoniumchlorid wurde abfiltriert, das Heptan destillativ entfernt und das Produkt destillativ gereinigt. Man erhielt 56 g Aminomethyltrimethoxysilan.

### Versuch 3:

In einem 1-Liter Rundkolben wurden 100 g Chlormethyldimethylmethoxysilan (Starfire Systems, Troy, USA) mit 300 g Cyclohexylamin bei einer Temperatur von 100 °C zur Reaktion gebracht. Nach 4 Stunden wurde auf Raumtemperatur abgekühlt, der Autoklav auf Normaldruck entspannt und 500 ml trockenes Heptan hinzugegeben. Das ausgefallene Cylohexylammoniumchlorid wurde abfiltriert, das Heptan destillativ entfernt und das Produkt destillativ gereinigt. Man erhielt 56 g Cylohexylaminomethyldimethylmethoxysilan.

### Versuch 4:

In einem 1-Liter Rundkolben wurden 100 g Chlormethyltrimethoxysilan (Starfire Systems, Troy, USA) mit 300 g Cyclohexylamin bei einer Temperatur von 100 °C zur Reaktion gebracht. Nach 4 Stunden wurde auf Raumtemperatur abgekühlt, der Autoklav auf Normaldruck entspannt und 500 ml trockenes Heptan hinzugegeben. Das ausgefallene Cylohexylammoniumchlorid wurde abfiltriert, das Heptan destillativ entfernt und das Produkt destillativ gereinigt. Man erhielt 56 g Cylohexylaminomethyltrimethoxysilan.

### Versuch 5:

In einem 1-Liter Rundkolben wurden 100 g 1-Chlormethyl-1,1-dimethoxy-1-methylsilan (Starfire Systems, Troy, USA) mit 300 g Cyclohexylamin bei einer Temperatur von 100 °C zur Reaktion gebracht. Nach 4 Stunden wurde auf Raumtemperatur abgekühlt, der Autoklav auf Normaldruck entspannt und 500 ml trockenes Heptan hinzugegeben: Das ausgefallene Cylohexylammoniumchlorid wurde abfiltriert, das Heptan destillativ entfernt und das Produkt destillativ gereinigt. Man erhielt 65 g Cylohexylaminomethyldimethoxymethylsilan.

### Versuch 6:

In einem 1-Liter Stahlautoklaven wurden 100 g Chlormethyldimethoxymethylsilan (Starfire Systems, Troy, USA) in einem Autoklaven mit 300 g flüssigem Ammoniak bei einer Temperatur von 100 °C zur Reaktion gebracht. Nach 5 Stunden wurde auf Raumtemperatur abgekühlt, der Autoklav auf Normaldruck entspannt und 500 ml trockenes Heptan hinzugegeben. Das ausgefallene Ammoniumchlorid wurde abfiltriert, das Heptan destillativ entfernt und das Produkt destillativ gereinigt. Man erhielt 45 g Aminomethyldimethoxymethylsilan.

### Beispiel 1:

1000 g bishydroxy-terminiertes Polydimethylsiloxan mit einem mittleren Molekulargewicht von 3000 g/mol wurden bei Raumtemperatur mit 23 g (1-Aminomethyl)dimethoxymethylsilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit Si-OH-Endgruppen erhalten hatte. Das Nebenprodukt Methanol wurde im Vakuum abgezogen und man erhielt 1010 g Poly(aminomethyl-methylsiloxan-co-dimethylsiloxan) mit einer Viskosität von 140 mPas.

### Beispiel 2:

1000 g bishydroxy-terminiertes Polydimethylsiloxan mit einem mittleren Molekulargewicht von 3000 g/mol wurden bei Raumtemperatur mit 30 g (1-Aminomethyl)dimethoxymethylsilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit Si-OH-Endgruppen erhalten hatte. Das Nebenprodukt Methanol wurde im Vakuum abgezogen und man erhielt 1030 g Poly(aminomethyl-methylsiloxan-co-dimethylsiloxan) mit einer Viskosität von 1000 mPas.

### Beispiel 3:

1000 g bishydroxy-terminiertes Polydimethylsiloxan mit einem mittleren Molekulargewicht von 3000 g/mol wurden bei Raumtemperatur mit 22,5 g (1-Aminomethyl)dimethoxymethylsilan umgesetzt und 39,8 g (1-Aminomethyl)dimethylmethoxysilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit AminomethylEndgruppen erhalten hatte. Das Nebenprodukt Methanol wurde im Vakuum abgezogen und man erhielt 1030 g Poly(aminomethyl-methylsiloxan-co-dimethylsiloxan) mit Aminomethylendgruppen und einer Viskosität von 100 mPas.

### Beispiel 4:

1000 g bishydroxy-terminiertes Polydimethylsiloxan mit einem mittleren Molekulargewicht von 3000 g/mol wurden bei Raumtemperatur mit 30 g (1-Aminomethyl)dimethoxymethylsilan umgesetzt und 26,5 g(1-Aminomethyl)dimethylmethoxysilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit AminomethylEndgruppen erhalten hatte. Das Nebenprodukt Methanol wurde im Vakuum abgezogen und man erhielt 1030 g Poly(aminomethyl-methylsiloxan-co-dimethylsiloxan) mit Aminomethylendgruppen und einer Viskosität von 180 mPas.

### Beispiel 5:

1000 g bishydroxy-terminiertes Polydimethylsiloxan mit einem mittleren Molekulargewicht von 3000 g/mol wurden bei Raumtemperatur mit 33,8 g (1-Aminomethyl)dimethoxymethylsilan umgesetzt und 19,9 g(1-Aminomethyl)dimethylmethoxysilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit AminomethylEndgruppen erhalten hatte. Das Nebenprodukt Methanol wurde im Vakuum abgezogen und man erhielt 1030 g Poly(aminomethyl-methylsiloxan-co-dimethylsiloxan) mit Aminomethylendgruppen und einer Viskosität von 290 mPas.

### Beispiel 6:

1000 g bishydroxy-terminiertes Polydimethylsiloxan mit einem mittleren Molekulargewicht von 3000 g/mol wurden bei Raumtemperatur mit 33,8 g (1-Aminomethyl)dimethoxymethylsilan umgesetzt und 14,5 g Hexamethyldisilazan umgesetzt. ¹H-NMR und ²⁹Si-NMR zeigten, daß nach 20 Stunden alle Alkoxy-Gruppen umgesetzt waren und man ein Aminomethyl funktionalisiertes Polydimethylsiloxan mit Trimethylsilyl-Endgruppen erhalten hatte. Das Nebenprodukt Methanol wurde im Vakuum abgezogen und man erhielt 1030 g Poly(aminomethyl-methylsiloxan-co-dimethylsiloxan) mit Aminomethylendgruppen und einer Viskosität von 270 mPas.

### Beispiel 7:

1000 g bishydroxy-terminiertes Polydimethylsiloxan mit einem mittleren Molekulargewicht von 3000 g/mol wurden bei Raumtemperatur mit 36,2 g (1-Cylohexylaminomethyl)dimethoxymethylsilan umgesetzt. ¹H-NMR und ²⁹Si-NMR zeigten, daß nach 60 Minuten alle Alkoxy-Gruppen umgesetzt waren und man ein Cyclohexylaminomethyl funktionalisiertes Polydimethylsiloxan mit Si-OH-Endgruppen erhalten hatte. Das Nebenprodukt Methanol wurde im Vakuum abgezogen und man erhielt 1030 g Poly(cyclohexylaminomethyl-methylsiloxan-co-dimethylsiloxan) und einer Viskosität von 180 mPas.

### Beispiel 8:

1000 g bishydroxy-terminiertes Polydimethylsiloxan mit einem mittleren Molekulargewicht von 10000 g/mol wurden bei Raumtemperatur mit 6,8 g (1-Aminomethyl)dimethoxymethylsilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit Si-OH-Endgruppen erhalten hatte. Das Nebenprodukt Methanol wurde im Vakuum abgezogen und man erhielt 980 g Poly(aminomethyl-methylsiloxan-co-dimethylsiloxan) mit einer Viskosität von 1800 mPas.

### Beispiel 9:

1000 g bishydroxy-terminiertes Polydimethylsiloxan mit einem mittleren Molekulargewicht von 1000 g/mol wurden bei Raumtemperatur mit 67,7 g (1-Aminomethyl)dimethoxymethylsilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit Si-OH-Endgruppen erhalten hatte. Das Nebenprodukt Methanol wurde im Vakuum abgezogen und man erhielt 1040 g Poly(aminomethyl-methylsiloxan-co-dimethylsiloxan) mit einer Viskosität von 62 mPas

### Beispiel 10:

1000 g monohydroxy-terminiertes Polydimethylsiloxan mit einem mittleren Molekulargewicht von 1000 g/mol (hergestellt durch anionische Polymerisation von D3-Cyclen und Abbruch mit Essigsäure) wurden bei Raumtemperatur mit 67,7 g (1-Aminomethyl)dimethoxymethylsilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit Trimethylsilyl-Endgruppen erhalten hatte. Das Nebenprodukt Methanol wurde im Vakuum abgezogen und man erhielt 1040 g Poly(aminomethyl-methylsiloxan-co-dimethylsiloxan) mit einer Viskosität von 58 mPas.

### Beispiel 11:

1000 g monohydroxy-terminiertes Polydimethylsiloxan mit einem mittleren Molekulargewicht von 1000 g/mol (hergestellt durch anionische Polymerisation von D3-Cyclen und Abbruch mit Essigsäure) wurden bei Raumtemperatur mit 75,7 g (1-Aminomethyl)trimethoxysilan umgesetzt. ¹H-NMR und ²⁹Si-NMR zeigten, daß nach 30 Minuten alle Alkoxy-Gruppen umgesetzt waren und man ein verzweigtes Aminomethyl funktionalisiertes Polydimethylsiloxan mit Trimethylsilyl-Endgruppen erhalten hatte. Das Nebenprodukt Methanol wurde im Vakuum abgezogen und man erhielt 1040 g Poly(aminomethyl-methylsiloxan-co-dimethylsiloxan) mit einer Viskosität von 69 mPas.

### Beispiel 12:

1000 g bishydroxy-terminiertes Polymethylvinyl-copolydimethylsiloxan mit einem Vinyl: Methyl -Verhältnis 1 : 4 mit einem mittleren Molekulargewicht von 2500 g/mol wurden bei Raumtemperatur mit 27,2 g (1-Aminomethyl)dimethoxymethylsilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit Si-OH-Endgruppen erhalten hatte. Das Nebenprodukt Methanol wurde im Vakuum abgezogen und man erhielt 990 g Poly(aminomethyl-methylsiloxan-co-dimethylsiloxan-co-methylvinylsiloxan) mit einer Viskosität von 130 mPas.

### Beispiel 13:

100 g bishydroxy-terminiertes Polymethyl-trifluorpropylsiloxan mit einem Trifluorpropyl: Methyl-Verhältnis von 1 : 1 und mit einem mittleren Molekulargewicht von 900 g/mol wurden bei Raumtemperatur mit 7,6 g (1-Aminomethyl)dimethoxymethylsilan umgesetzt. ¹H-NMR und ²⁹Si-NMR zeigten, daß nach 30 Minuten alle Alkoxy-Gruppen umgesetzt waren und man ein Aminomethyl funktionalisiertes Polydimethylsiloxan mit Si-OH-Endgruppen erhalten hatte. Das Nebenprodukt Methanol wurde im Vakuum abgezogen und man erhielt 103 g Poly(aminomethyl-methylsiloxan-co-trifluorpropylmethylsiloxan) mit einer Viskosität von 53 mPas.

### Beispiel 14:

1000 g bishydroxy-terminiertes Polydimethylsiloxan mit einem mittleren Molekulargewicht von 3000 g/mol wurden bei Raumtemperatur mit 27.2 g (1-Aminomethyl)diethoxymethylsilan umgesetzt. ¹H-NMR und ²⁹Si-NMR zeigten, daß nach 90 Minuten alle Alkoxy-Gruppen umgesetzt waren und man ein Aminomethyl funktionalisiertes Polydimethylsiloxan mit Si-OH-Endgruppen erhalten hatte. Das Nebenprodukt Ethanol wurde im Vakuum abgezogen und man erhielt 1010 g Poly(aminomethyl-methylsiloxan-co-dimethylsiloxan) mit einer Viskosität von 125 mPas.

### Beispiel 15:

1000 g bishydroxy-terminiertes Polydimethylsiloxan mit einem mittleren Molekulargewicht von 3000 g/mol wurden bei Raumtemperatur mit 36,9 g 1,5-Dimethoxy-1,1,5,5-tetramethyl-1,5-disila-3-aza-pentan umgesetzt. ¹H-NMR und ²⁹Si-NMR zeigten, daß nach 90 Minuten alle Alkoxy-Gruppen umgesetzt waren und man ein Aminodimethyl funktionalisiertes Polydimethylsiloxan mit Si-OH-Endgruppen erhalten hatte. Das Nebenprodukt Methanol wurde im Vakuum abgezogen und man erhielt 1010 g eines aminodimethyl-funktionalisierten Polydimethylsiloxan mit einer Viskosität von 137 mPas.

## Patentansprüche

1. Aminofunktionelle Organosiloxane der allgemeinen Formel I,
(SiO_{4/2})ₖ(RSiO_{3/2})ₘ(R₂SiO_{2/2})ₚ(R₃SiO_{1/2})_{q}[O_{1/2}H]ₜ ((O_{f/2}R¹_{3-f}SiCR²₂)_{3-g}NR_{g}⁴]ₛ (I)
in der
**R** ein Wasserstoffatom oder einen monovalenten gegebenenfalls mit -CN, -NCO, -N**R^{x}**₂, -COOH, -COO**R^{x}**, -Halogen, -Acryl, -Epoxy, -SH, -OH oder -CONR^{x}₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -N**R^{x}**- ersetzt sein können und in denen eine oder mehrere, einander nicht benachbarte Methineinheiten durch Gruppen, -N=, -N=N-, oder -P= ersetzt sein können,
**R¹** ein Wasserstoffatom oder einen monovalenten gegebenenfalls mit -CN, -NCO, -COOH, -COO**R^{x}**, -Halogen, -Acryl, -SH, -OH oder -CON**R^{x}**₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -N**R^{x}**- ersetzt sein können und in denen eine oder mehrere, einander nicht benachbarte Methineinheiten durch Gruppen, -N=,-N=N-, oder -P= ersetzt sein können,
**R^{x}** Wasserstoff oder einen gegebenenfalls mit -CN oder Halogen substituierten C₁-C₁₀-Kohlenwasserstoffrest,
**R²** Wasserstoff oder einen gegebenenfalls mit -CN oder Halogen substituierten C₁-C₂₀-Kohlenwasserstoffrest,
**R⁴** Wasserstoff oder einen gegebenenfalls mit -CN oder Halogen substituierten C₁-C₂₀-Kohlenwasserstoffrest,
**k, m, p, q** unabhängig voneinander eine ganze Zahl von mindestens 0 bis 100 000,
**f** eine ganze Zahl von 1, 2 oder 3,
**g** eine ganze Zahl von 0, 1 oder 2,
**s** eine ganze Zahl von mindestens 1 und
**t** eine ganze Zahl von mindestens 0 bedeuten, wobei
**k + m + p + q** eine ganze Zahl von mindestens 1 ist, mit der Massgabe, dass mindestens eine Aminofunktion in der Kette positioniert ist.

2. Aminofunktionelle Organosiloxane nach Anspruch 1, bei denen **R** ein C₁-C₁₀-Alkylrest oder Phenylrest ist.

3. Aminofunktionelle Organosiloxane nach Anspruch 1 oder 2, bei denen **R¹** ein C₁-C₆-Alkylrest ist.

4. Aminofunktionelle Organosiloxane nach Anspruch 1 bis 3, bei denen **R²** ein C₁-C₃-Alkylrest oder Wasserstoff ist.

5. Aminofunktionelle Organosiloxane nach Anspruch 1 bis 4, bei denen **R⁴** ein C₁-C₁₂-Alkyl- oder Arylrest oder Wasserstoff ist.

6. Aminofunktionelle Organosiloxane nach Anspruch 1 bis 5, bei denen **p** Werte von 3 bis 1000 aufweist.

7. Aminofunktionelle Organosiloxane nach Anspruch 1 bis 6, bei denen **k + m** den Wert 0 bedeutet.

8. Aminofunktionelle Organosiloxane nach Anspruch 1 bis 7, bei denen **k + m + p + q** eine ganze Zahl von mindestens 2 bedeutet.

9. Verfahren zur Herstellung der aminofunktionellen Organosiloxane der allgemeinen Formel I gemäß Anspruch 1, bei dem Siloxane der allgemeinen Formel (II)
(SiO_{4/2})ₖ(RSiO_{3/2})ₘ(R₂SiO_{2/2})p(R₃SiO_{2/2})_{q}[O_{1/2}H]ᵣ (II),
mit aminofunktionellen Silanen der Formel (III)
[(R³O)_{f}R¹_{3-f}SiCR²₂]_{3-g}NR_{g}⁴ (III)
umgesetzt werden, wobei
**R³** Wasserstoff oder einen gegebenenfalls mit -CN oder Halogen substituierten C₁-C₂₀-Kohlenwasserstoffrest,
**r** eine ganze Zahl von mindestens 1 bedeuten und
**t** kleiner als r ist und
**R, R¹, R², R⁴ k, m, p, q, f, g** und **s** die in Anspruch 1 aufgeführten Bedeutungen aufweisen.

## Claims

1. Amino-functional organosiloxanes of the general formula I
(SiO_{4/2})ₖ(RSiO_{3/2})ₘ(R₂SiO_{2/2})ₚ(R₃SiO_{1/2})_{q}[O_{1/2}H]ₜ ((O_{f/2}R¹_{3-f}SiCR²₂)_{3-g}NR_{g}⁴]ₛ (I)
in which
R is a hydrogen atom or a monovalent Si-C-bonded C₁-C₂₀-hydrocarbon radical or C₁-C₁₅-hydrocarbonoxy radical, each of which is optionally substituted by -CN, -NCO, -NR^{x}₂, -COOH, -COOR^{x}, -halogen, -acryloyl, -epoxy, -SH, -OH or -CONR^{x}₂, and in each of which one or more non-adjacent methylene units may be replaced by -O-, -CO-, -COO-, -OCO- or -OCOO-, -S- or -NR^{x}- groups, and in each of which one or more non-adjacent methine units may be replaced by -N=, -N=N- or -P= groups,
R¹ is a hydrogen atom or a monovalent Si-C-bonded C₁-C₂₀-hydrocarbon radical or C₁-C₁₅-hydrocarbonoxy radical which is optionally substituted by -CN, -NCO, -COOH, -COOR^{x}, -halogen, -acryloyl, -SH, -OH or -CONR^{x}₂, and in each of which one or more non-adjacent methylene units may be replaced by -O-, -CO-, -COO-, -OCO- or -OCOO-, -S- or -NR^{x}- groups, and in each of which one or more non-adjacent methine units may be replaced by -N=, -N=N- or -P= groups,
R^{x} is a hydrogen or a C₁-C₁₀-hydrocarbon radical which is optionally substituted by -CN or halogen,
R² is a hydrogen or a C₁-C₂₀-hydrocarbon radical which is optionally substituted by -CN or halogen,
R⁴ is a hydrogen or a C₁-C₂₀-hydrocarbon radical which is optionally substituted by -CN or halogen,
k, m, p, q are each independently an integer from at least 0 to 100 000,
f is an integer of 1, 2 or 3,
g is an integer of 0, 1 or 2,
s is an integer of at least 1 and
t is an integer of at least 0, where
k + m + p + q is an integer of at least 1, with the proviso that at least one amino function is positioned in the chain.

2. Amino-functional organosiloxanes according to Claim 1, in which R is a C₁-C₁₀-alkyl radical or phenyl radical.

3. Amino-functional organosiloxanes according to Claim 1 or 2, in which R¹ is a C₁-C₆-alkyl radical.

4. Amino-functional organosiloxanes according to Claims 1 to 3, in which R² is a C₁-C₃-alkyl radical or hydrogen.

5. Amino-functional organosiloxanes according to Claims 1 to 4, in which R⁴ is a C₁-C₁₂-alkyl or aryl radical or hydrogen.

6. Amino-functional organosiloxanes according to Claims 1 to 5, in which p has values of from 3 to 1000.

7. Amino-functional organosiloxanes according to Claims 1 to 6, in which k + m has the value 0.

8. Amino-functional organosiloxanes according to Claims 1 to 7, in which k + m + p + q is an integer of at least 2.

9. Process for preparing the amino-functional organosiloxanes of the general formula I according to Claim 1, in which siloxanes of the general formula (II)
(SiO_{4/2})ₖ(RSiO_{3/2})ₘ(R₂SiO_{2/2})p(R₃SiO_{2/2})_{q}[O_{1/2}H]ᵣ (II)
are reacted with amino-functional silanes of the formula (III)
[(R³O)_{f}R¹_{3-f}SiCR²₂]_{3-g}NRg⁴ (III)
where
R³ is hydrogen or a C₁-C₂₀-hydrocarbon radical which is optionally substituted by -CN or halogen,
r is an integer of at least 1 and
t is less than r and
R, R¹, R², R⁴, k, m, p, q, f, g and s are each as defined in Claim 1.

## Revendications

1. Organosiloxanes à fonction amino, de formule générale I,
(SiO_{4/2})ₖ(RSiO_{3/2})ₘ(R₂SiO_{2/2})ₚ(R₃SiO_{1/2})_{q}[O_{1/2}H]ₜ [(O_{f/2}R¹_{3-f}SiCR²₂)_{3-g}NR_{g}⁴]ₛ (I)
dans laquelle
**R** représente un atome d'hydrogène ou un radical hydrocarboné en C₁-C₂₀ ou un radical hydrocarboné(C₁-C₁₅)-oxy, monovalent, lié à Si-C, éventuellement substitué par -CN, -NCO, -N**R^{x}**₂, -COOH, -COO**R^{x}**, -halogène, -acryloyle, -époxy, -SH, -OH ou -CONR^{x}₂, dans lequel une ou plusieurs unités méthylène non contiguës peuvent être remplacées chacune par des groupes -O-, -CO-, -COO-, -OCO- ou -OCOO-, -S- ou -N**R^{x}-** et dans lesquels une ou plusieurs unités méthine non contiguës peuvent être remplacées chacune par des groupes -N=, -N=N- ou -P=,
**R¹** représente un atome d'hydrogène ou un radical hydrocarboné en C₁-C₂₀ ou un radical hydrocarbonê(C₁-C₁₅)-oxy, monovalent, lié à Si-C, éventuellement substitué par -CN, -NCO, -COOH, -COO**R^{x}**, -halogène, -acryloyle, -SH, -OH ou -CON**R^{x}**₂, dans lequel une ou plusieurs unités méthylène non contiguës peuvent être remplacées chacune par des groupes -O-, -CO-, -COO-, -OCO- ou -OCOO-, -S- ou -N**R^{x}**- et dans lesquels une ou plusieurs unités méthine non contiguës peuvent être remplacées chacune par des groupes -N=, -N=N- ou -P=,
**R^{x}** représente un atome d'hydrogène ou un radical hydrocarboné en C₁-C₁₀ éventuellement substitué par -CN ou halogène,
**R²** représente un atome d'hydrogène ou un radical hydrocarboné en C₁-C₂₀ éventuellement substitué par -CN ou halogène,
**R⁴** représente un atome d'hydrogène ou un radical hydrocarboné en C₁-C₂₀ éventuellement substitué par -CN ou halogène,
**k, m, p, q** représentent, indépendamment les uns des autres, un nombre entier allant d'au moins 0 à 100 000,
**f** représente un nombre entier égal à 1, 2 ou 3,
**g** représente un nombre entier égal à 0, 1 ou 2,
**s** représente un nombre entier égal au moins à 1, et
**t** représente un nombre entier égal au moins à 0,
**k + m + p + q** étant un nombre entier égal au moins à 1,
étant entendu qu'au moins une fonction amino est positionnée dans la chaîne.

2. Organosiloxanes à fonction amino selon la revendication 1, dans lesquels **R** est un radical alkyle en C₁-C₁₀ ou un radical phényle.

3. Organosiloxanes à fonction amino selon la revendication 1 ou 2, dans lesquels **R¹** est un radical alkyle en C₁-C₆.

4. Organosiloxanes à fonction amino selon l'une quelconque des revendications 1 à 3, dans lesquels **R²** est un radical alkyle en C₁-C₃ ou un atome d'hydrogène.

5. Organosiloxanes à fonction amino selon l'une quelconque des revendications 1 à 4, dans lesquels **R⁴** est un radical alkyle en C₁-C₁₂ ou aryle ou un atome d'hydrogène.

6. Organosiloxanes à fonction amino selon l'une quelconque des revendications 1 à 5, dans lesquels p a des valeurs allant de 3 à 1000.

7. Organosiloxanes à fonction amino selon l'une quelconque des revendications 1 à 6, dans lesquels la somme **k + m** a la valeur 0.

8. Organosiloxanes à fonction amino selon l'une quelconque des revendications 1 à 7, dans lesquels la somme **k + m + p + q** est un nombre entier égal au moins à 2.

9. Procédé pour la préparation des organosiloxanes à fonction amino de formule générale I selon la revendication 1, dans lequel on fait réagir des siloxanes de formule générale (II)
(SiO_{4/2})ₖ(RSiO_{3/2})ₘ(R₂SiO_{2/2})ₚ(R³SiO_{1/2})_{q}[O_{1/2}H]ᵣ (II)
avec des silanes à fonction amino, de formule (III)
[(R³O)_{f}R¹_{3-f}SiCR²₂]_{3-g}NRg⁴ (III)
dans lesquelles
**R³** représente un atome d'hydrogène ou un radical hydrocarboné en C₁-C₂₀ éventuellement substitué par -CN ou halogène,
**r** représente un nombre entier égal au moins à 1 et
**t** est inférieur à r et
**R, R¹, R², R⁴, k, m, p, q, f, g** et **s** ont les significations indiquées dans la revendication 1.
